# EUROPEAN PATENT APPLICATION

(11) **EP 4 757 201 A1**
(43) Date of publication of application: **10.06.2026**
(21) Application number: 25221488.7
(22) Date of filing: 08.12.2025
(51) Int. Cl.: H04B 7/155, H04W 24/02

(54) **DYNAMIC SIGNAL AMPLIFICATION SYSTEM FOR IOT DEVICES**

(30) Priority: 09.12.2024 US 202418974780
(71) Applicant: T MOBILE INNOVATIONS LLC, Overland Park KS 66251-2100 (US)
(72) Inventor: CHINIMILLI, Srinivasa, Sammamish, 98075 (US); ELUMALAI, Anbalagan, Issaquah, 98029 (US)
(74) Representative: Suddaby, Mark Edward

(57) **Abstract**

A method of communicating between an Internet of Things (IoT) device manager and loT devices. The method comprises receiving information about radio conditions by an loT device radio relay from the loT devices; transmitting the information by the IoT device radio relay to an IoT service enabler platform; training a machine learning (ML) model by the loT service enabler platform based on the information about radio conditions; determining radio transmission adaptation rules by the IoT service enabler platform based on the trained ML model; sending the rules by the IoT service enabler platform to the IoT device radio relay; adapting a radio of the IoT device radio relay based on the rules and based on current radio conditions experienced by the loT devices; and, after adapting the radio of the IoT device relay, transmitting messages by the radio of the IoT device radio relay to the loT devices.

## Description

### BACKGROUND

Internet of Things (IoT) devices refer to a variety of devices that have an electronic device that is able to communicate via the Internet, for example communicate via a wireless communication link to the Internet. These devices can include remote sensors, such as temperature sensors, pressure sensors, viscosity sensors, flow-rate sensors, or humidity sensors located at remote and/or hazardous locations. These devices can include in-home appliances such as refrigerators, freezers, heating, ventilation, and air conditioning (HVAC) systems, entertainment systems, or in-home alarm systems. It is expected that in the near future there may be billions of IoT devices communicating via the Internet with IoT management and/or monitoring systems. The needs of IoT devices vary from those of ordinary personal mobile communication devices (e.g., cell phones) in that they may consume little communication bandwidth and may communicate infrequently (e.g., once every five minutes for 3 seconds, once every hour for 3 seconds, once per day for 3 seconds, or some other periodic interval and for some other duration of time). The IoT devices may operate using battery power that may not be conveniently recharged or replaced. For example, replacing a battery in an IoT device pressure sensor at a natural gas pipeline pumping station may involve a technician driving a long distance to a remote location to replace one or more batteries in IoT devices at the remote location. Additionally, replacing a battery may involve human hazard that typically is not experienced when recharging a personal mobile communication device. For example, the technician replacing a battery in an IoT device pressure sensor at a natural gas pipeline pumping station may be at risk of a spark igniting an explosion if there is a natural gas leak at the pumping station. For example, replacing a battery in an IoT device may involve human hazard related to getting to the IoT device, for example climbing a tall ladder to reach an IoT device located high up on a water tower.

### SUMMARY

In an embodiment, an Internet of Things (IoT) device dynamic signal amplification system is disclosed. The system comprises an IoT device radio relay, where the IoT device radio relay comprises an at least one radio transceiver having a radio power amplifier, wherein the at least one radio transceiver is configured to receive messages from an IoT device management system, to transmit the messages received from the IoT device management system to a plurality of IoT devices, to receive messages from the plurality of IoT devices, and to transmit the messages received from the plurality of IoT devices to an IoT device management system. The IoT device radio relay further comprises an at least one antenna communicatively coupled to the radio transceiver, a processor communicatively coupled to the radio transceiver, a non-transitory memory communicatively coupled to the processor, and an application stored in the non-transitory memory. When executed by the processor, the application determines a radio environment of a plurality of IoT devices based at least in part on information received by the at least one radio transceiver from the plurality of IoT devices, based on the determined radio environment of the plurality of IoT devices, determines an adapted parameter of the radio transceiver, and reconfigures the radio transceiver with the adapted parameter.

In another embodiment, a method of communicating between an Internet of Things (IoT) device manager and a plurality of IoT devices. The method comprises receiving information about radio conditions by an IoT device radio relay from the plurality of IoT devices; transmitting the information about radio conditions by the IoT device radio relay to an IoT service enabler platform; and training a machine learning (ML) model by the IoT service enabler platform based on the information about radio conditions. The method further comprises determining a plurality of radio transmission adaptation rules by the IoT service enabler platform based on the trained ML model; sending the plurality of radio transmission adaptation rules by the IoT service enabler platform to the IoT device radio relay; adapting a radio of the IoT device radio relay based on the radio transmission adaptation rules and based on current radio conditions experienced by the plurality of IoT devices; and, after adapting the radio of the IoT device relay, transmitting messages by the radio of the IoT device radio relay to the plurality of IoT devices.

In yet another embodiment, an Internet of Things (IoT) service enabler platform is disclosed. The IoT service enabler platform comprises a processor; a non-transitory memory communicatively coupled to the processor; a communication interface communicatively coupled to the processor; and an application stored in the non-transitory memory. When executed by the processor, the application trains a machine learning (ML) model using information about a radio environment experienced by a plurality of IoT devices, determines a plurality of radio transmission adaptation rules by the IoT based on the trained ML model, wherein the radio transmission adaptation rules promote an IoT device radio relay adapting its radio parameters and wherein the radio parameters comprise two or more of a radio amplifier power level, an antenna beam direction, an antenna beam width, and a modulation scheme, and transmits the radio transmission adaptation rules to the IoT device radio relay.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2 is a flow chart of a method according to an embodiment of the disclosure.
FIG. 3A and FIG. 3B is a block diagram of a communication network according to an embodiment of the disclosure.
FIG. 4 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The present disclosure teaches an Internet of Things (IoT) device radio relay that dynamically adapts its radio parameters to promote robust wireless communication between IoT devices and an IoT device management platform. As an example use case, an operator of an industrial site may use an IoT device management platform to monitor and manage a plurality of IoT devices located at the industrial site, for example a natural gas pipeline pumping station. The communication path between the IoT devices at the industrial site and the IoT device management platform may be provided by a communication link from the IoT device management platform to the Internet, a communication link from the Internet to a cellular communication core network (possibly also viewed as part of the Internet), a communication link from the cellular communication core network to a particular cell site proximate the industrial site, and cellular wireless communication link between the cell site and the IoT devices at the industrial site. But the cellular wireless communication link may be poor or inefficient in some circumstances. To overcome this problem, the IoT device radio relay can be disposed between the cell site, and or other wireless communication node such as a WiFi access point (AP) or a satellite communication node, and the IoT devices.

The IoT device radio relay receives a message sent by the IoT device management platform to the IoT devices via a first wireless communication link and transmits these messages to the IoT devices over a second wireless communication link. The IoT device radio relay receives messages sent by the IoT devices to the IoT device management platform on the second wireless communication link and transmits these messages to the IoT device management platform over the first wireless communication link. Unlike the wireless link between the cell site (or WiFi AP or satellite) directly to the IoT devices, however, the IoT device radio relay can dynamically adapt its radio transmission and reception parameters based on the radio environment between the IoT devices and the IoT device radio relay. The IoT device radio relay can dynamically adapt one or more of its transmission signal strength (e.g., adapt a power level of a radio frequency power amplifier), adapt a direction of a beam of its antenna, adapt a beam width of its antenna, adapt a radio modulation scheme, and other radio parameters.

The IoT device radio relay collects metrics and/or information on the radio environment between the IoT devices and the IoT device radio relay and sends this information to an IoT service enabler platform. The metrics and/or information may comprise received signal strength indications (RSSI) values experienced by the IoT devices, a signal to noise ratio (SNR) experienced by the IoT devices and/or by the IoT device radio relay, a packet error rate experienced by the IoT devices and/or by the IoT device radio relay, a battery power level of the IoT devices, a modulation scheme used for communication between the IoT devices and the IoT device radio relay, a beam direction of the IoT device radio relay, a beam width of the IoT device radio relay, a power level of the IoT device radio relay, and other metrics and/or information. It is understood that the metrics and/or information may be collected periodically and/or on an event driven basis. For example, metrics may be collected periodically and also on the event of the IoT device radio relay transmitting a message to an IoT device.

The IoT service enabler platform can analyze the metrics and/or information on the radio environment between the IoT devices and the IoT device radio relay to generate adaptation rules. The IoT service enabler platform can transmit the adaptation rules to the IoT device radio relay, and the IoT device radio relay can apply the adaptation rules it receives to adapt its radio parameters to improve radio communications between the IoT devices and the IoT device radio relay. More particularly, the IoT service enabler platform can execute machine learning (ML) algorithms to train a model based on the metrics and/or information about the radio environment of the IoT devices, and generate the adaptation rules from the model. In an embodiment, the adaptation rules promote the IoT device radio relay adapting radio parameters in anticipation of degradation in the radio link between the IoT device radio relay and the IoT devices.

It is understood that the IoT service enabler platform may generate different adaptation rules for different IoT device radio relays. For example, a first IoT device radio relay may communicate with a first plurality of IoT devices at a first industrial location, a second IoT device radio relay may communicate with a second plurality of IoT devices at a second industrial location, and a third IoT device radio relay may communicate with a third plurality of IoT devices at a third industrial location. The IoT service enabler platform can analyze the metrics and/or information of each of the three different radio environments (e.g., a first radio environment between the first plurality of IoT devices and the first IoT device radio relay, a second radio environment between the second plurality of IoT devices and the second IoT device radio relay, and a third radio environment between the third plurality of IoT devices and the third IoT device radio relay) separately and generate three different set of adaptation rules, each set of adaptation rules suited to its particular radio environment.

In an embodiment, the IoT service enabler platform can send commands to the IoT devices, via the IoT device radio relay, to sleep for a defined period of time, for example to sleep for five minutes, to sleep for ten minutes, to sleep for fifteen minutes, to sleep for thirty minutes, to sleep for an hour, to sleep for three hours, to sleep for six hours, to sleep for twelve hours, to sleep for a day, to sleep for three days, to sleep for a week, to sleep for two weeks, to sleep for a month, or to sleep for some period of time. Alternatively, the IoT service enabler platform can send a schedule to the IoT devices, via the IoT device radio relay, for when the IoT device should go active and communicate, for example transmitting sensor values via the IoT device radio relay back to the IoT device management platform.

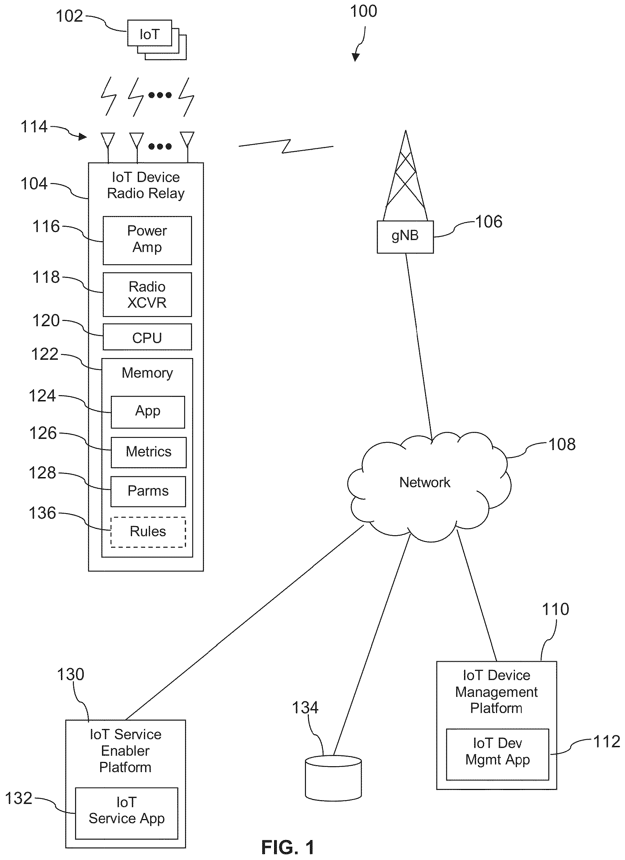

Turning now to FIG. 1, a system 100 is described. In an embodiment, the system 100 comprises a plurality of Internet of Things (IoT) devices 102 that communicate wirelessly with an IoT device radio relay 104. The system 100 also comprises a cell site 106, a network 108, and an IoT device management platform 110 that executes an IoT device management application 112. The IoT device management platform 110 can communicate with the IoT devices 102 via the network 108, the cell site 106, and the IoT device radio relay 104. In an embodiment, the IoT device radio relay 104 communicates to the network 108 via a WiFi access point (AP) or via a satellite communication link. The network 108 comprises one or more public networks, one or more private networks, or a combination thereof. The cell site 106 may establish a wireless communication link with the IoT device radio relay 104 according to one or more of a 5 G, a 6 G, a long-term evolution (LTE), a code division multiple access (CDMA), or a global system for mobile communication (GSM) telecommunication protocol. The IoT device radio relay 104 may communicate with the IoT devices 102 according to any of 5 G, 6 G, LTE, CDMA, or GSM protocols. Alternatively, the IoT device radio relay 104 may communicate with the IoT devices 102 according to different wireless protocols. The IoT device management platform 110 may comprise a computer. Computers are described further hereinafter.

The IoT device management platform 110 may be operated by an owner of the IoT devices 102. For example, the IoT device management platform 110 may be operated by an energy company and the IoT devices 102 may be disposed at a natural gas pipeline pumping station. The IoT device management platform 110 may promote the energy company monitoring and managing the natural gas pipeline pumping station. For example, the IoT device management platform 110 may be operated by water and sewer department of a municipality and the IoT devices 102 may be disposed at a water treatment plant. The IoT device management platform 110 may promote the water and sewer department monitoring and managing a water treatment plant. The owner of the IoT device management platform 110 and the IoT devices 102 may be a subscriber for communication services with a communication service provider to obtain communication links from the IoT device management platform 110 to the IoT devices 102 and/or from the network 108 to the IoT devices 102. In an embodiment, the IoT device radio relay 104 may be owned and operated by the communication service provider that provides communications from the network 108 to the IoT devices 102. Alternatively, the IoT device radio relay 104 may be owned and operated by the enterprise or organization that owns and operates the IoT device management platform 110 and the IoT devices 102. The IoT device management platform 110 can send a message to the IoT devices 102 via the IoT device radio relay 104 and receive messages from the IoT devices 102 via the IoT device radio relay 104. The messages may comprise commands sent from the IoT device management platform 110 to the IoT devices 102. The messages may comprise measurements and/or status information sent by the IoT devices 102 to the IoT device management platform 110.

In an embodiment, the IoT device radio relay 104 comprises an antenna 114, a radio power amplifier 116, a radio transceiver 118, a processor 120, and a memory 122. In an embodiment, the memory 122 comprises a non-transitory portion that stores an adaptation application 124. In an embodiment, the memory 122 stores metrics 126 and/or information about a radio environment between the IoT devices 102 and the IoT device radio relay 104. The metrics 126 may be stored in a non-transitory portion of the memory 122 or in a transitory portion of the memory 122. In an embodiment, the antenna 114 comprises a plurality of antenna elements that can be configured so as to establish and direct a focused beam of the antenna in a preferred direction, for example to either improve reception of radio signals the IoT device radio relay 104 transmits to one of the IoT devices 102 and/or to improve reception of radio signals transmitted by one of the IoT devices 102 to the IoT device radio relay 104 (e.g., the antenna 114 operates as a reciprocal device - both transmitting and receiving in a like fashion).

In an embodiment, the memory 122 stores radio parameters 128 in a non-transitory portion. The radio parameters 128 may also be stored in the radio transceiver 118, in the radio power amplifier 116, and or in the antenna 114. For example, the radio parameters 128 may be stored quasi-permanently in the non-transitory portion of the memory 122 and during power-on initialization of the IoT device radio relay 104, the radio parameters 128 may be configured into the radio transceiver 118, the radio power amplifier 116, and/or the antenna 114. The radio parameters 128 can define a power level of the radio power amplifier 116, a beam width of the antenna 114, a beam direction of the antenna 114, a modulation scheme used for radio communication between the IoT device radio relay 104 and the IoT devices 102.

The IoT devices 102 capture metrics about their radio environment including one or more of a received signal strength indication (RSSI) and a signal to noise ratio. The IoT devices 102 may capture metrics on data packet losses and/or retransmissions. The IoT devices 102 can transmit their collected metrics to the IoT device radio relay 104, and the IoT device radio relay 104 can transmit the collected IoT device metrics to the IoT service enabler platform 130. The IoT service enabler platform 130 may store the metrics in a data store 134. Alternatively, the IoT device radio relay 104 may transmit the metrics to the data store 134. In an embodiment, the IoT device radio relay 104 captures its own metrics on the radio environment and sends these metrics to the IoT service enabler platform 130 and/or to the data store 134 along with the metrics received from the IoT devices 102. The IoT device radio relay 104 may capture information on a power level of its radio power amplifier 116, on a beam width of its antenna 114, on a beam direction of its antenna 114, on a signal to noise ratio experienced by the IoT device radio relay 104.

The IoT service application 132 can analyze the information and/or metrics about the radio environment experienced by the IoT devices 102 and optionally information and/or metrics about the radio environment experienced by the IoT device radio relay 104 to adapt the parameters 128 of the IoT device radio relay 104. The adapted parameters 128 may improve the communication between the IoT devices 102 and the IoT device radio relay 104. The IoT service application 132 may also command the IoT device radio relay 104 to command one or more of the IoT devices 102 to set a communication schedule, for example to transmit data from the IoT device 102 to the IoT device radio relay 104 on some periodic basis or on a changed periodic basis. The IoT service application 132 may also command the IoT device radio relay 104 to command one or more of the IoT devices 102 to sleep for a specific duration of time, whereby to extend a battery life of the IoT device 102 until a technician can replace the battery of the IoT device 102. In an embodiment, the IoT service application 132 uses machine learning (ML) techniques to develop adapted radio parameters 128 for the IoT device radio relay 104.

In an embodiment, the IoT service application 132, rather than determining specific radio parameters to send to the IoT device radio relay, determines adaptation rules and sends the rules to the IoT device radio relay 104, and the IoT device radio relay 104 stores them in the non-transitory portion of memory 122 as adaptation rules 136. The adaptation application 124 may use these adaptation rules 136, along with the analysis of the current radio conditions, to determine the radio parameters 128. Thus, the IoT service application 132 may do the "heavy lifting" of ML processing of large amounts of information and metrics stored in the data store 134 and distill the results of that intensive processing into rules that are succinct and easily applied by the less capable IoT device radio relay 104 (e.g., the processor 120 of the IoT device radio relay 104 may have modest processing capacity compared to the IoT service enabler platform 130). In an embodiment, wherein the adaptation rules associate different radio parameter values with different days of the week and different times of day. For example, the ML training may infer that the radio environment is different for the IoT devices on different days of the week and at different times of day.

In an embodiment, the IoT service enabler platform 130 interworks with a plurality of different IoT device radio relays 104 and a plurality of different IoT devices 102. In an embodiment, the IoT service enabler platform 130 interworks with different IoT device radio relays 104 and different IoT devices 102 located at different industrial locations. Therefore, the IoT service enabler platform 130 can benefit from analyzing a large collection of information and metrics collected from a diverse set of radio environments to generate rules for a specific IoT device radio relay 104.

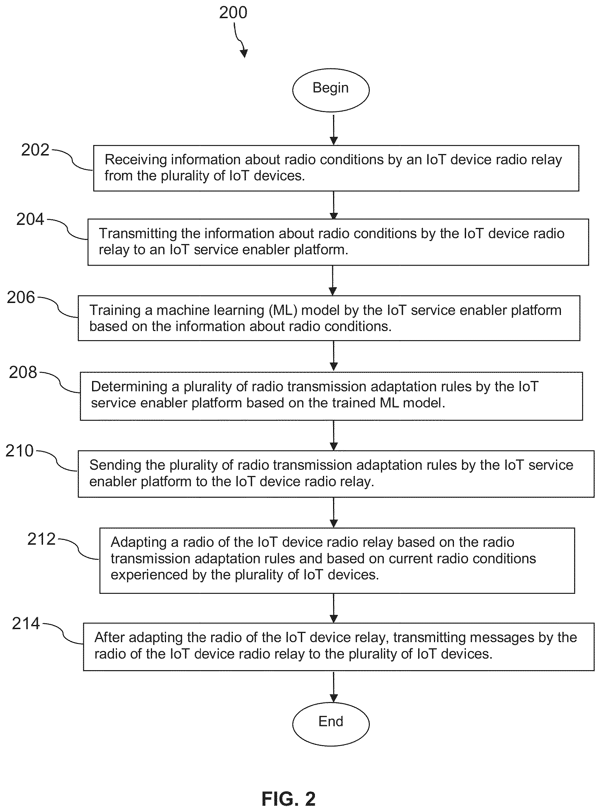

Turning now to FIG. 2, a method 200 is described. In an embodiment, the method 200 is a method of communicating between an Internet of Things (IoT) device manager and a plurality of IoT devices. At block 202, the method 200 comprises receiving information about radio conditions by an IoT device radio relay from a plurality of IoT devices. In an embodiment, the information about radio conditions comprises a received signal strength indication (RSSI) and a signal to noise ratio experienced by the plurality of IoT devices. In an embodiment, the IoT devices are associated with home appliances. For example, the IoT devices may be associated with any of a refrigerator, a freezer, an HVAC system, an entertainment system, an in-home alarm system. In an embodiment, the IoT devices are associated with industrial equipment. For example, the IoT devices may be associated with a temperature sensor, a pressure sensor, a viscosity sensor, a flow rate sensor, a humidity sensor.

At block 204, the method 200 comprises transmitting the information about radio conditions by the IoT device radio relay to an IoT service enabler platform. At block 206, the method 200 comprises training a machine learning (ML) model by the IoT service enabler platform based on the information about radio conditions.

At block 208, the method 200 comprises determining a plurality of radio transmission adaptation rules by the IoT service enabler platform based on the trained ML model. At block 210, the method 200 comprises sending the plurality of radio transmission adaptation rules by the IoT service enabler platform to the IoT device radio relay.

At block 212, the method 200 comprises adapting a radio of the IoT device radio relay based on the radio transmission adaptation rules and based on current radio conditions experienced by the plurality of IoT devices. The processing of block 212 may comprise adapting the radio parameters 128 in the IoT device radio relay 104 as described above with reference to FIG. 1. In an embodiment, adapting the radio of the IoT device radio relay comprises one or more of adapting a power level of a power amplifier of the IoT device radio relay (e.g., storing a different power level value in the radio parameters 128 and/or in the radio power amplifier 116), adapting an antenna beam width of an antenna of the IoT device radio relay (e.g., storing a different antenna beam width parameter or setting in the radio parameters 128 and/or in the radio transceiver 118 and/or in the antenna 114), adapting an antenna beam direction of an antenna of the IoT device radio relay (e.g., storing a different antenna beam direction parameter or setting in the radio parameters 128 and/or in the radio transceiver 118 and/or in the antenna 114), or adapting a modulation scheme of a radio of the IoT device radio relay (e.g., storing a different modulation scheme identification in the radio parameters 128 and/or in the radio transceiver 118). At block 214, the method 200 comprises, after adapting the radio of the IoT device relay, transmitting messages by the radio of the IoT device radio relay to the plurality of IoT devices. In an embodiment, the method 200 further comprises receiving messages from the plurality of IoT devices by the IoT device radio relay; and transmitting the messages received from the plurality of IoT devices by the IoT device radio relay to a cell site according to one of a 5G, a 6G, a long-term evolution (LTE), a code division multiple access (CDMA), or a global system for mobile communication (GSM) telecommunication protocol.

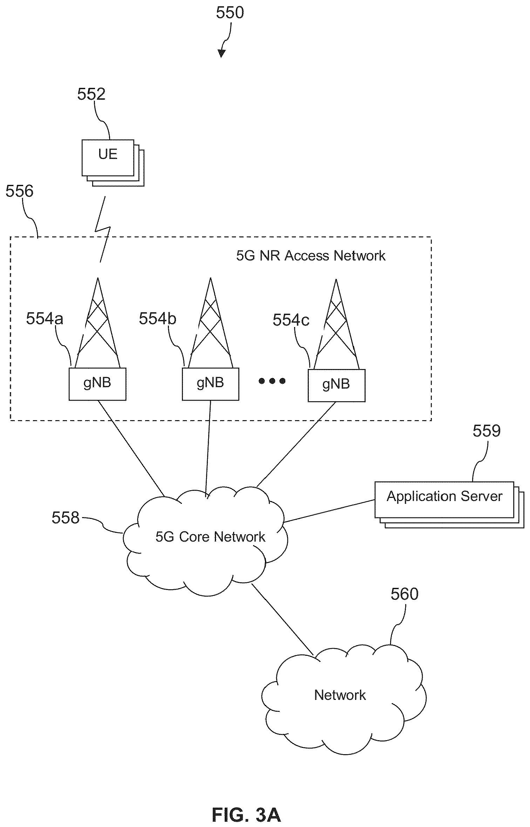

Turning now to FIG. 3A, an exemplary communication system 550 is described. Typically, the communication system 550 includes a number of access nodes 554 that are configured to provide coverage in which UEs 552 such as cell phones, tablet computers, machine-type-communication devices, tracking devices, embedded wireless modules, and/or other wirelessly equipped communication devices (whether or not user operated), can operate. The access nodes 554 may be said to establish an access network 556. The access network 556 may be referred to as a radio access network (RAN) in some contexts. In a 5G technology generation an access node 554 may be referred to as a next Generation Node B (gNB). In 4G technology (e.g., long-term evolution (LTE) technology) an access node 554 may be referred to as an evolved Node B (eNB). In 3G technology (e.g., code division multiple access (CDMA) and global system for mobile communication (GSM)) an access node 554 may be referred to as a base transceiver station (BTS) combined with a base station controller (BSC). In some contexts, the access node 554 may be referred to as a cell site or a cell tower. In some implementations, a picocell may provide some of the functionality of an access node 554, albeit with a constrained coverage area. Each of these different embodiments of an access node 554 may be considered to provide roughly similar functions in the different technology generations.

In an embodiment, the access network 556 comprises a first access node 554a, a second access node 554b, and a third access node 554c. It is understood that the access network 556 may include any number of access nodes 554. Further, each access node 554 could be coupled with a core network 558 that provides connectivity with various application servers 559 and/or a network 560. In an embodiment, at least some of the application servers 559 may be located close to the network edge (e.g., geographically close to the UE 552 and the end user) to deliver so-called "edge computing." The network 560 may be one or more private networks, one or more public networks, or a combination thereof. The network 560 may comprise the public switched telephone network (PSTN). The network 560 may comprise the Internet. With this arrangement, a UE 552 within coverage of the access network 556 could engage in air-interface communication with an access node 554 and could thereby communicate via the access node 554 with various application servers and other entities.

The communication system 550 could operate in accordance with a particular radio access technology (RAT), with communications from an access node 554 to UEs 552 defining a downlink or forward link and communications from the UEs 552 to the access node 554 defining an uplink or reverse link. Over the years, the industry has developed various generations of RATs, in a continuous effort to increase available data rate and quality of service for end users. These generations have ranged from "1G," which used simple analog frequency modulation to facilitate basic voice-call service, to "4G" - such as Long-Term Evolution (LTE), which now facilitates mobile broadband service using technologies such as orthogonal frequency division multiplexing (OFDM) and multiple input multiple output (MIMO).

Recently, the industry has been exploring developments in "5G" and particularly "5G NR" (5G New Radio), which may use a scalable OFDM air interface, advanced channel coding, massive MIMO, beamforming, mobile mmWave (e.g., frequency bands above 24 GHz), and/or other features, to support higher data rates and countless applications, such as mission-critical services, enhanced mobile broadband, and massive Internet of Things (IoT). 5G is hoped to provide virtually unlimited bandwidth on demand, for example providing access on demand to as much as 20 gigabits per second (Gbps) downlink data throughput and as much as 10 Gbps uplink data throughput. Due to the increased bandwidth associated with 5G, it is expected that the new networks will serve, in addition to conventional cell phones, general internet service providers for laptops and desktop computers, competing with existing ISPs such as cable internet, and also will make possible new applications in internet of things (IoT) and machine to machine areas.

In accordance with the RAT, each access node 554 could provide service on one or more radio-frequency (RF) carriers, each of which could be frequency division duplex (FDD), with separate frequency channels for downlink and uplink communication, or time division duplex (TDD), with a single frequency channel multiplexed over time between downlink and uplink use. Each such frequency channel could be defined as a specific range of frequency (e.g., in radio-frequency (RF) spectrum) having a bandwidth and a center frequency and thus extending from a low-end frequency to a high-end frequency. Further, on the downlink and uplink channels, the coverage of each access node 554 could define an air interface configured in a specific manner to define physical resources for carrying information wirelessly between the access node 554 and UEs 552.

Without limitation, for instance, the air interface could be divided over time into frames, subframes, and symbol time segments, and over frequency into subcarriers that could be modulated to carry data. The example air interface could thus define an array of time-frequency resource elements each being at a respective symbol time segment and subcarrier, and the subcarrier of each resource element could be modulated to carry data. Further, in each subframe or other transmission time interval (TTI), the resource elements on the downlink and uplink could be grouped to define physical resource blocks (PRBs) that the access node could allocate as needed to carry data between the access node 554 and served UEs 552.

In addition, certain resource elements on the example air interface could be reserved for special purposes. For instance, on the downlink, certain resource elements could be reserved to carry synchronization signals that UEs 552 could detect as an indication of the presence of coverage and to establish frame timing, other resource elements could be reserved to carry a reference signal that UEs 552 could measure in order to determine coverage strength, and still other resource elements could be reserved to carry other control signaling such as PRB-scheduling directives and acknowledgement messaging from the access node 554 to served UEs 552. And on the uplink, certain resource elements could be reserved to carry random access signaling from UEs 552 to the access node 554, and other resource elements could be reserved to carry other control signaling such as PRB-scheduling requests and acknowledgement signaling from UEs 552 to the access node 554.

The access node 554, in some instances, may be split functionally into a radio unit (RU), a distributed unit (DU), and a central unit (CU) where each of the RU, DU, and CU have distinctive roles to play in the access network 556. The RU provides radio functions. The DU provides L1 and L2 real-time scheduling functions; and the CU provides higher L2 and L3 non-real time scheduling. This split supports flexibility in deploying the DU and CU. The CU may be hosted in a regional cloud data center. The DU may be co-located with the RU, or the DU may be hosted in an edge cloud data center.

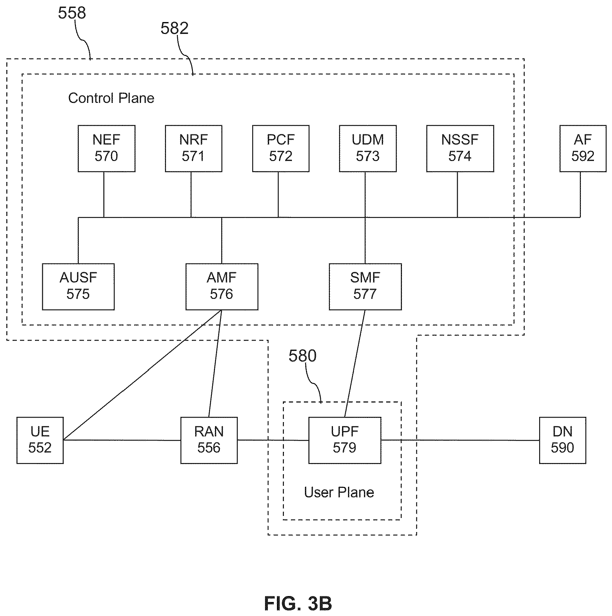

Turning now to FIG. 3B, further details of the core network 558 are described. In an embodiment, the core network 558 is a 5G core network. 5G core network technology is based on a service-based architecture paradigm. Rather than constructing the 5G core network as a series of special purpose communication nodes (e.g., an HSS node, a MME node, etc.) running on dedicated server computers, the 5G core network is provided as a set of services or network functions. These services or network functions can be executed on virtual servers in a cloud computing environment which supports dynamic scaling and avoidance of long-term capital expenditures (fees for use may substitute for capital expenditures). These network functions can include, for example, a user plane function (UPF) 579, an authentication server function (AUSF) 575, an access and mobility management function (AMF) 576, a session management function (SMF) 577, a network exposure function (NEF) 570, a network repository function (NRF) 571, a policy control function (PCF) 572, a unified data management (UDM) 573, a network slice selection function (NSSF) 574, and other network functions. The network functions may be referred to as virtual network functions (VNFs) in some contexts.

Network functions may be formed by a combination of small pieces of software called microservices. Some microservices can be re-used in composing different network functions, thereby leveraging the utility of such microservices. Network functions may offer services to other network functions by extending application programming interfaces (APIs) to those other network functions that call their services via the APIs. The 5G core network 558 may be segregated into a user plane 580 and a control plane 582, thereby promoting independent scalability, evolution, and flexible deployment.

The UPF 579 delivers packet processing and links the UE 552, via the access network 556, to a data network 590 (e.g., the network 560 illustrated in FIG. 3A). The AMF 576 handles registration and connection management of non-access stratum (NAS) signaling with the UE 552. Said in other words, the AMF 576 manages UE registration and mobility issues. The AMF 576 manages reachability of the UEs 552 as well as various security issues. The SMF 577 handles session management issues. Specifically, the SMF 577 creates, updates, and removes (destroys) protocol data unit (PDU) sessions and manages the session context within the UPF 579. The SMF 577 decouples other control plane functions from user plane functions by performing dynamic host configuration protocol (DHCP) functions and IP address management functions. The AUSF 575 facilitates security processes.

The NEF 570 securely exposes the services and capabilities provided by network functions. The NRF 571 supports service registration by network functions and discovery of network functions by other network functions. The PCF 572 supports policy control decisions and flow-based charging control. The UDM 573 manages network user data and can be paired with a user data repository (UDR) that stores user data such as customer profile information, customer authentication number, and encryption keys for the information. An application function 592, which may be located outside of the core network 558, exposes the application layer for interacting with the core network 558. In an embodiment, the application function 592 may be executed on an application server 559 located geographically proximate to the UE 552 in an "edge computing" deployment mode. The core network 558 can provide a network slice to a subscriber, for example an enterprise customer, that is composed of a plurality of 5G network functions that are configured to provide customized communication service for that subscriber, for example to provide communication service in accordance with communication policies defined by the customer. The NSSF 574 can help the AMF 576 to select the network slice instance (NSI) for use with the UE 552.

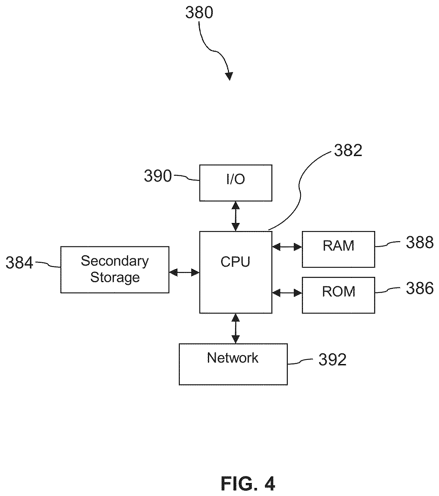

FIG. 4 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. An Internet of Things, IoT, device dynamic signal amplification system, comprising:
an IoT device radio relay, comprising:
an at least one radio transceiver having a radio power amplifier, wherein the at least one radio transceiver is configured to receive messages from an IoT device management system, to transmit the messages received from the IoT device management system to a plurality of IoT devices, to receive messages from the plurality of IoT devices, and to transmit the messages received from the plurality of IoT devices to an IoT device management system,
an at least one antenna communicatively coupled to the radio transceiver,
a processor communicatively coupled to the radio transceiver,
a non-transitory memory communicatively coupled to the processor, and
an application stored in the non-transitory memory that, when executed by the processor:
determines a radio environment of a plurality of IoT devices based at least in part on information received by the at least one radio transceiver from the plurality of IoT devices,
based on the determined radio environment of the plurality of IoT devices, determines an adapted parameter of the radio transceiver, and
reconfigures the radio transceiver with the adapted parameter.

2. The system of claim 1, wherein the adapted parameter configures a beam width or a beam direction of the at least one antenna of the at least one radio transceiver of the IoT device radio relay.

3. The system of claim 1, wherein the adapted parameter is a power level of radio power amplifier of the at least one radio transceiver of the IoT device radio relay.

4. The system of any preceding claim, wherein the application of the IoT device radio relay determines the adapted parameter of the radio transceiver in part based on a plurality of adaptation rules stored in the non-transitory memory of the IoT device radio relay.

5. The system of claim 4, further comprising an IoT service enabler platform, wherein the IoT device radio relay transmits information on the radio environment of the plurality of IoT devices to the IoT service enabler platform, the IoT service enabler platform analyzes the information on the radio environment, the IoT service enabler platform determines the plurality of adaptation rules based on analyzing the information on the radio environment, and the IoT service enabler platform sends the plurality of adaptation rules to the IoT device radio relay.

6. The system of any preceding claim, wherein the IoT device radio relay is configured to communicate with a cell site according to a 5G, a 6G, a long-term evolution, LTE, a code division multiple access, CDMA, or a global system for mobile communication, GSM, telecommunication protocol, and wherein the IoT device radio relay is configured to communicate with the plurality of IoT devices according to a 5G, a 6G, an LTE, a CDMA, or a GSM telecommunication protocol.

7. A method of communicating between an Internet of Things, IoT, device manager and a plurality of IoT devices, comprising:
receiving information about radio conditions by an IoT device radio relay from the plurality of IoT devices;
transmitting the information about radio conditions by the IoT device radio relay to an IoT service enabler platform;
training a machine learning (ML) model by the IoT service enabler platform based on the information about radio conditions;
determining a plurality of radio transmission adaptation rules by the IoT service enabler platform based on the trained ML model;
sending the plurality of radio transmission adaptation rules by the IoT service enabler platform to the IoT device radio relay;
adapting a radio of the IoT device radio relay based on the radio transmission adaptation rules and based on current radio conditions experienced by the plurality of IoT devices; and
after adapting the radio of the IoT device relay, transmitting messages by the radio of the IoT device radio relay to the plurality of IoT devices.

8. The method of claim 7, wherein the information about radio conditions comprises a received signal strength indication, RSSI, and a signal to noise ratio experienced by the plurality of IoT devices.

9. The method of claim 7 or 8, wherein the IoT devices are associated with home appliances or industrial equipment.

10. The method of any one of claims 7 to 9, wherein adapting the radio of the IoT device radio relay comprises one or more of adapting a power level of a power amplifier of the IoT device radio relay, adapting an antenna beam width of an antenna of the IoT device radio relay, adapting an antenna beam direction of an antenna of the IoT device radio relay, or adapting a modulation scheme of a radio of the IoT device radio relay.

11. The method of any one of claims 7 to 10, further comprising:
receiving messages from the plurality of IoT devices by the IoT device radio relay; and
transmitting the messages received from the plurality of IoT devices by the IoT device radio relay to a cell site according to one of a 5G, a 6G, a long-term evolution, LTE, a code division multiple access, CDMA, or a global system for mobile communication, GSM, telecommunication protocol.

12. An Internet of Things, IoT, service enabler platform, comprising:
a processor;
a non-transitory memory communicatively coupled to the processor;
a communication interface communicatively coupled to the processor; and
an application stored in the non-transitory memory that, when executed by the processor:
trains a machine learning, ML, model using information about a radio environment experienced by a plurality of IoT devices,
determines a plurality of radio transmission adaptation rules by the IoT based on the trained ML model, wherein the radio transmission adaptation rules promote an IoT device radio relay adapting its radio parameters and wherein the radio parameters comprise two or more of a radio amplifier power level, an antenna beam direction, an antenna beam width, and a modulation scheme, and
transmits the radio transmission adaptation rules to the IoT device radio relay.

13. The IoT service enabler platform of claim 12, wherein the information about the radio environment experienced by the plurality of IoT devices comprises: a received signal strength indication, RSSI, of the IoT devices, or a signal to noise ratio of the IoT devices.

14. The IoT service enabler platform of claim 12 or 13, wherein the application further trains the ML model using information about the IoT device radio relay, wherein the information about the IoT device radio relay comprises a power level of a power amplifier of the IoT device radio relay, a beam width of an antenna of the IoT device radio relay, and a beam direction of the antenna of the IoT device radio relay.

15. The IoT service enabler platform of any one of claims 12 to 14, wherein the adaptation rules associate different radio parameter values with different days of the week and different times of day.
